# EUROPEAN PATENT APPLICATION

(11) **EP 2 554 280 A1**
(43) Date of publication of application: **06.02.2013**
(21) Application number: 11759492.9
(22) Date of filing: 24.03.2011
(51) Int. Cl.: B09B 5/00, B09B 3/00, C04B 18/10, C04B 28/02, C09K 5/08, H05K 9/00

(54) **PRODUCT OBTAINED BY BAKING CACAO BEAN HUSK**

(30) Priority: 26.03.2010 JP 2010072552
(71) Applicant: The Nisshin OilliO Group, Ltd., Tokyo 104-8285 (JP)
(72) Inventor: GOTOU, Hiroyuki, Tokyo 104-8285 (JP); SHINOHARA, Go, Tokyo 104-8285 (JP); KUNO, Noriyasu, Tokyo 104-8285 (JP)
(74) Representative: Hodsdon, Stephen James
(86) International application number: PCT/JP2011/057118
(87) International publication number: WO 2011/118687

(57) **Abstract**

A cacao husk can be effectively used. A member comprises a burned material of cacao husk and a base material, and is sieved so that the median diameter of the burned material of cacao husk becomes approx. 85 µm or below. The member functions as a heat conducting material, an electromagnetic shielding member, etc. The content ratio of burned material of cacao husk against the base material can be determined according to the frequency band of the electromagnetic waves to be shielded. In addition, the base material can be one of rubber, paint and cement.

## Description

### FIELD OF THE INVENTION

The present inventions is related to a burned material of cacao husk and a heat conducting material, electromagnetic shielding member, electrically conductive composition using the burned material of cacao husk.

### BACKGROUND OF THE INVENTION

Patent Document 1 discloses the manufacturing process of the material which can use cocoa beans not only for chocolate and cocoa but also for food fields other than these broadly, the food which utilizes the texture improvement of cocoa beans and the physiological and nutritional components of cocoa beans, and also the technology which provides a way to easily remove a cacao husk from cocoa beans. This technology is to remove the cacao husk from cacao beans with husk by vaporizing the moisture in cocoa beans or/and cacao nibs rapidly.

Patent Document 1: Patent No. 4370883

### DISCLOSURE OF THE INVENTION

### PROBLEM TO BE SOLVED BY THE INVENTION

By the way, in recent years, while the above food is offered by using cacao beans as raw material, a large amount of cacao husk is generating. The further reuse of cacao husk is investigated from a viewpoint of ecology.

Therefore, the present invention makes it a subject to use a cacao husk effectively.

### MEANS OF SOLVING THE PROBLEMS

The present inventors have focused on a burned material of cacao husk and found out that it was beneficially used as a heat conducting material, a electromagnetic shielding member, a electrically conductive composition, an electronic device, an inspection equipment of electronic device, a building material, a coating material and an anti-static material, etc.

Although more information will be described later, in order to solve the above subject, the member of the present invention contains a burned material of cacao husk and a base material, and the burned material of cacao husk is sieved to give a median diameter of approx. 80 µm or below. This member works as a heat conducting material, a electromagnetic shielding member, etc. The content ratio of burned material of cacao husk against a base material can be determined according to the frequency band of the electromagnetic waves to be shielded. The base material can be one of rubber, paint and cement. In addition, the present invention also extends to the burned material of cacao husk included in the above member.

### EMBODYMENT OF THE INVENTION

Referring to drawings, embodiments according to the present invention are described hereinafter.

In this embodiment, the burned material of cacao husk is obtained by burning cacao husk in an inert gas atmosphere with nitrogen gas etc. or in a vacuum condition by using a carbonization apparatus such as holding furnace or rotary kiln, for example, at a temperature of approx. 900 [°C]. Then, the burned material of cacao husk is ground and then sieved with, for example, a 106 µm by 106 µm mesh. In addition, the cacao husk in this embodiment is the skin itself which mainly covers plural cocoa beans contained in the fruit of cacao, and it may be called cacao shell. In this embodiment, although various experiments and evaluation are performed with the contents described above, the cacao husk in this enforcement includes not only the cacao shell but also the mixture of the cacao shell and the skin covering cocoa beans.

As a result, about 80% of the entire burned material of cacao husk becomes 85 µm or below. In this case, the median diameter was, for example, approx. 39 µm. Hereinafter, when the burning temperature is clearly specified as 900 [°C], the burned material of cacao husk has a median diameter of approx. 39 µm.

The median diameter was measured by a laser diffraction particle size analyzer, SALD-7000 etc. made by SHIMADZU Corporation. In this embodiment, a burned material of cacao husk whose median diameter is approx. 30 µm to approx. 60 µm and a burned material whose minimum median diameter is approx. 1 µm by those further selective pulverizing are explained.

Pulverizing herein refers to a pulverization of a pre-pulverizing material to reduce its median diameter by about one decimal order. Therefore, it refers that a median diameter of 30 µm before pulverization is pulverized to 3 µm. However, pulverizing does not refer to exactly reducing the median diameter before pulverization by approx. one decimal order, and it also includes pulverizing to reduce the median diameter before pulverization to 1/5 - 1/20. In this embodiment, the pulverization was carried out so that the median diameter after pulverization becomes approx. 1 µm at the smallest.

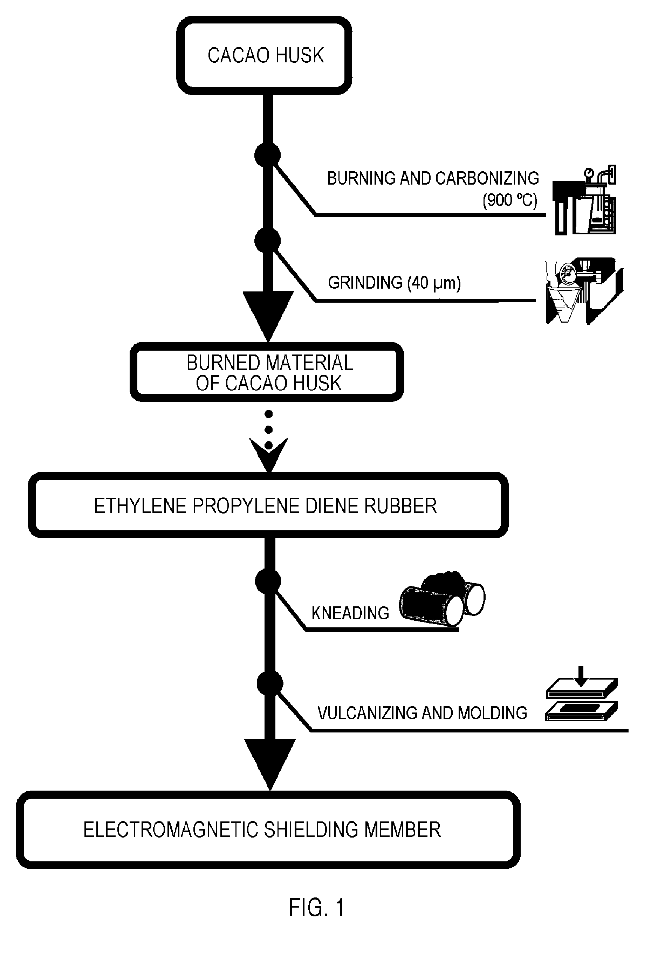

Fig. 1 shows a schematic production process diagram of the electromagnetic shielding member using burned material of cacao husk. First, a resol-type phenolic resin is contained selectively against a cacao husk, then, it is set in a carbonization apparatus. Mixing a resol-type phenolic resin with cacao husk allows improving the strength and carbon content of the burned material of cacao husk. However, please note that said mixing itself is not essential for producing the electromagnetic shielding member of this embodiment.

Second, the cacao husk is heated at the rate of approx. 2 [°C] per minute in a nitrogen gas atmosphere to reach a prescribed temperature such as 700 [°C] - 1500 [°C] (for example, 900 [°C]). Then the carbonization process is provided for about 3 hours at the attained temperature.

Next, the burned cacao husk is ground and sieved to obtain a burned material of cacao husk with a median diameter of, for example, approx. 4 µm to approx. 85 µm (for example, 40 µm). Subsequently, the burned material of cacao husk and ethylene propylene diene monomer rubber are set in a kneading machine together with various additives and are then given a kneading process. Then, the kneaded material is given a molding process, and is then given a vulcanization process. In this way, the production of electromagnetic shielding member completes. In addition, as described later, the electromagnetic shielding member functions also as a heat conducting material, an electromagnetic shielding member, an electrically conductive composition, etc.

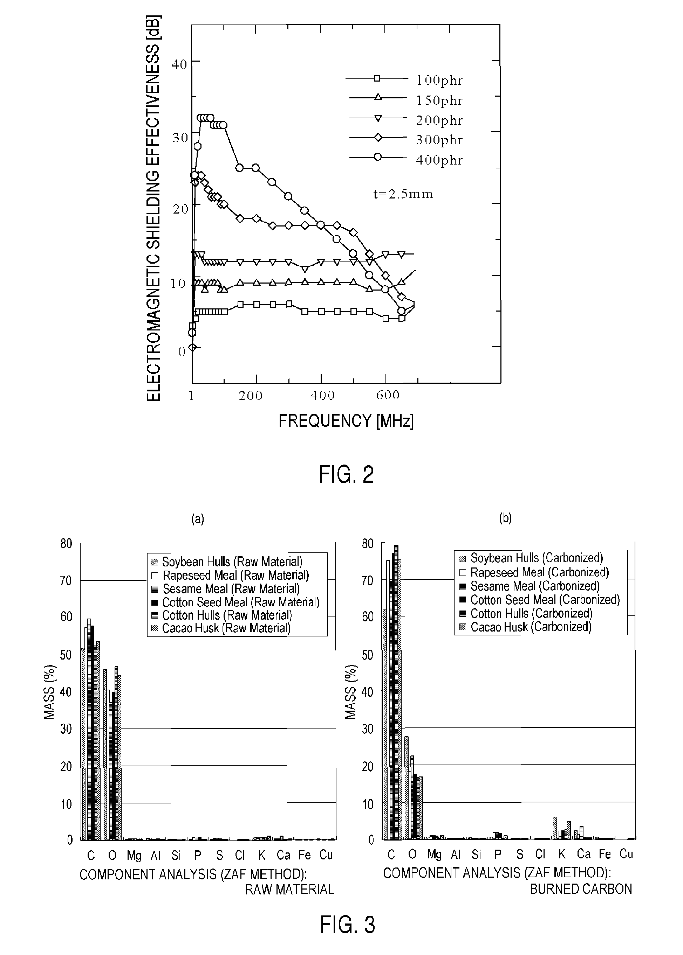

Fig. 2 shows charts indicating the measurement results of the electromagnetic shielding characteristics of the burned material of cacao husk. In Fig. 2, the lateral axis and vertical axis indicate frequency [MHz] and electromagnetic shielding effectiveness [dB] respectively. In addition, these electromagnetic shielding characteristics were obtained by using Shield Material Evaluator (TR17301A manufactured by Advantest Corporation) and Spectrum Analyzer (TR4172 manufactured by Advantest Corporation) at Yamagata Research Institute of Technology, Okitama Branch.

As seen in Fig. 2, it is found that the electromagnetic shielding effectiveness has been improved as the content ratio of the burned material of cacao husk against the base material increases. Some points that are worth noting can be read from Fig. 2.

First, the electromagnetic shielding member of this embodiment can adjust freely the content ratio of the burned material of cacao husk against the base material. Furthermore, it is particularly worth noting that the burned material of cacao husk can increase the content ratio against the base material. As shown in Fig. 2, the burned material of cacao husk of this embodiment has a characteristic of improving the electromagnetic shielding effectiveness as increasing the content ratio against the base material.

Here, instead of the burned material of cacao husk, when carbon black was used as the containing object to ethylene propylene diene monomer rubber, it was found that the flexibility of the burned material of cacao husk was reduced by containing as much as 100 [phr] of carbon black against ethylene propylene diene monomer rubber.

And, I would not say that it is impossible to contain as much as 400 [phr] of carbon black against the rubber, but it will essentially be very difficult to achieve that. In contrast to this, in the case of the burned material of cacao husk of this embodiment, as much as approx. 400 [phr] can be contained against the rubber.

Second, the burned material of cacao husk of this embodiment can improve the electromagnetic shielding effectiveness significantly as a result of the increased content ratio against the base material. From a different view point, the burned material of cacao husk of this embodiment is advantageously easy to control its electromagnetic shielding effectiveness by adjusting the content ratio against the base material.

As shown in Fig. 2, for the electromagnetic shielding member of this embodiment, an excellent electromagnetic shielding effectiveness is particularly observed in the frequency band of around 100 [MHz]. Specifically, when the content ratio of the burned material of cacao husk is approx. 400 [phr] against rubber, the electromagnetic shielding member maintains 20 [dB] or above up to the frequency band of 350 [MHz] with a maximum value of over 30 [dB].

This value is excellent considering that most of the generally commercially available electromagnetic shielding members in the market have an electromagnetic shielding effectiveness within the range of 5 [dB] to 25 [dB]. Similarly, even if the content ratio of the burned material of cacao husk is approx. 300 [phr], an electromagnetic shielding effectiveness of 20 [dB] or above has been maintained in the frequency band of 100 [MHz] and below.

Third, the electromagnetic shielding member of this embodiment has good handling during manufacturing and can be formed by using a metal mold with a required shaped etc. Even if a shape of electronic substrate requiring electromagnetic shielding member mounted on an electronic appliance does not have a planer shape, an electromagnetic shielding member corresponding to the shape of the electronic substrate can be produced. Moreover, it is also possible to mix the burned material of cacao husk of this embodiment in adhesives, etc. and to apply to an electronic substrate, etc.

However, the electromagnetic shielding member of this embodiment also has a degree of freedom to process cutting and vending, etc. This point is also advantageous in the production of electromagnetic shielding member.

An electronic appliance in late years is space-saving tendency inside the case accompanied by the downsizing. Therefore, there are problems such as a difficulty in using an electromagnetic shielding member of desired in the space inside the case, or a necessity for a layout of electronic appliance considering the space allocation for an electromagnetic shielding member.

Since the electromagnetic shielding member of this embodiment can be formed into a shape corresponding to the shape of the space inside electronic appliance, it also causes a secondary effect of not requiring a product layout etc. considering the space allocation for an electromagnetic shielding member.

In addition, the electromagnetic shielding member of this embodiment can be preferably used for electronic appliance, inspection apparatus for electronic appliance and building material, etc. The electromagnetic shielding member of this embodiment, for example, can be provided for a communication terminal body such as a mobile phone and PDA (Personal Digital Assistant), etc., or can be mounted on an electronic substrate built in a communication terminal body, or can be provided for a so-called shield box, or can be provided for roof material, floor material or wall material, etc., or can be used for a part of work shoes and work clothes as an anti-static material due to its conductivity.

As a result of this, there are advantageous effects of making it possible to eliminate a cause for concern about adverse impact on human body from the electromagnetic waves generated from mobile phones etc. or power cables etc. around houses, to provide a light-weight shield box, and to provide work shoes etc. having anti-static capability.

Next, the following measurements etc. have been carried out for "cacao husk before and after burning", "electromagnetic shielding member equipped with it".

(1) Component analysis of the "cacao husk before and after burning",
(2) Tissue observation of the "cacao husk before and after burning",
(3) Conductivity test for the "burned material of cacao husk",
(4) Regarding the "electromagnetic shielding member", measurement of the surface resistivity by different burning temperatures or median diameters of the cacao husk.

Fig. 3(a) shows a chart indicating the result of the component analysis based on the ZAF quantitative analysis method for cacao husk before burning. Fig. 3(b) shows a chart indicating the result of the component analysis based on the ZAF quantitative analysis method for cacao husk shown in Fig. 3(a) after burning.

In addition, the results of the component analysis for soybean hulls, rapeseed meal, sesame meal, cotton seed meal, cotton hulls are also shown in Fig. 3(a) and Fig. 3(b), for comparison.

Although the production conditions for the burned material of cacao husk etc. are as shown in Fig. 1, the "prescribed temperature" and "median diameter" were respectively set to 900 [°C] and approx. 30 µm - approx. 60 µm. Since it has been said that the ZAF quantitative analysis method is quantitatively less reliable regarding C, H and N elements in comparison with the organic micro-elemental analysis method, an analysis based on the organic micro-elemental analysis method was also performed separately in order to perform a highly reliable analysis regarding C, H and N elements.

The cacao husk before burning shown in Fig. 3(a) has relatively low percentage of "C" and has relatively high percentage of "O". On the other hand, the cacao husk after burning shown in Fig. 3(b) has average percentage of "C" and has low percentage of "O". Thus, regarding cacao husk, the effective increase of "C" can be seen, because the percentage of "O" decreases while the percentage of "C" increases by burning.

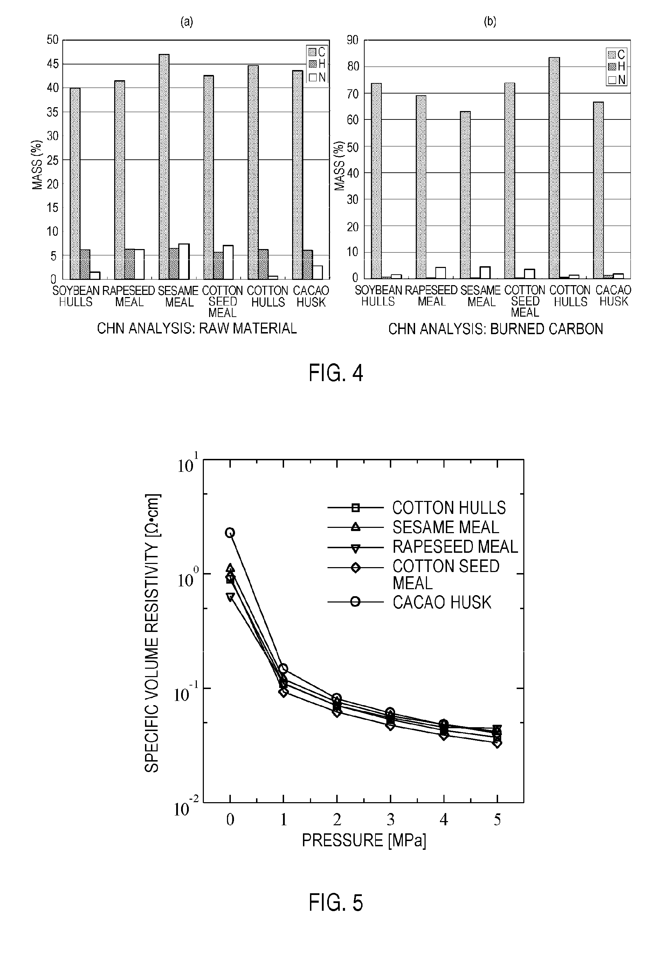

Fig. 4(a) shows a chart indicating the result of the component analysis based on the organic micro-elemental analysis method corresponding to Fig. 3(a). Fig. 4(b) shows a chart indicating the result of the component analysis based on the organic micro-elemental analysis method corresponding to Fig. 3(b).

As seen in Fig. 4(a) and Fig. 4(b), the ratios of organic elements included in the burned materials of six kinds of plants can generally be evaluated as similar to each other. However, since rapeseed meal, sesame meal and cotton seed meal have the common feature of being oil meal, it is perceived that those charts are similar to each other. Specifically, it is perceived that the percentage of "N" is relatively high while the increase rate in "C" before and after burning is relatively low.

In contrast, since soybean hulls and cotton hulls have the common feature of being hulls, it is perceived that those charts are similar to each other. Specifically, it is perceived that the percentage of "N" is relatively low while the increase rate in "C" before and after burning is relatively high. On the other hand, a cacao husk has relatively low percentage of "C" while has relatively high increase rate in "N" before and after burning. In addition, in terms of "C", cotton hulls are the highest (approx. 83%), while sesame meal is the lowest (approx. 63%).

In addition, according to the component analysis for the cacao husk, the results of the component analysis (organic micro-elemental analysis) of cacao husk before burning had the carbon component, hydrogen component and nitrogen component of respectively approx. 43.60%, approx. 6.02% and | approx. 2.78%._In contrast, the results of the component analysis(organic micro-elemental analysis) of cacao husk after burning had the carbon component, hydrogen component and nitrogen component of respectively approx. 65.57%, approx. 1.12% and approx. 1.93%. Furthermore, the specific volume resistivity of the burned material of cacao husk was 4.06x10⁻² Ω • cm.

Furthermore, according to the component analysis based on the organic micro-elemental analysis method, it is perceived that the cacao husk etc. before burning, in general, are essentially rich in the carbon component. In contrast, according to the component analysis based on the organic micro-elemental analysis method, it is perceived that, regarding cacao husk etc. after burning, the carbon component is increased by burning.

Fig. 5 shows charts indicating the test results of the conductivity test regarding the "burned material of cacao husk". The lateral axis and vertical axis of Fig. 5 respectively represent the pressure [MPa] applied to the burned material of cacao husk and the specific volume resistivity [Ω•cm]. In addition, the test results for cotton hulls, sesame meal, rapeseed meal, cotton seed meals are also shown in Fig. 5, for reference.

The method employed was that, 1 g of the powdered "burned material of cacao husk" as a test object was put in a cylindrical container with an inner diameter of approx. 25Φ, and a cylindrical brass with a diameter of approx 25Φ was aligned to the opening part of the above container, and then a press machine (MP-SC manufactured by Toyo Seiki Seisaku-Sho, Ltd.) was used to apply pressure to the burned material of cacao husk by pressing via the brass from 0 [MPa] to 4 [MPa] or 5 [MPa] with an increment of 0.5 [MPa] so that the specific volume resistivity was measured by bringing the side part and bottom part of the brass into contact with a probe of a low resistivity meter (Loresta-GP MCP-T600 manufactured by DIA Instruments Co. Ltd.) while the burned material of soybean hulls was pressured.

When a cylindrical container with approx. 10Φ was used instead of the cylindrical container with approx. 25Φ, and a cylindrical brass with a diameter of approx. 10Φ was used instead of the cylindrical brass with a diameter of approx. 25Φ, and when the rest of the conditions were the same as above, an equivalent test result was obtained by the conductivity test.

According to the test result shown in Fig. 5, it is found that the burned material of cacao husk has a characteristic which reduces its specific volume resistivity (that is, increasing the conductivity) by applying a pressure of more than 0.5[MPa], for example, and as the pressure increases.

Specifically, the specific volume resistivity of cotton hulls is 3.74x10⁻² [Ω•cm], the specific volume resistivity of sesame meal is 4.17x10⁻² [Ω•cm], the specific volume resistivity of rapeseed meal is 4.49x10⁻² [Ω•cm], the specific volume resistivity of cotton seed meals is 3.35x10⁻² [Ω•cm] and the specific volume resistivity of cacao husk is 4.06x10⁻² [Ω•cm].

In fact, although there is exactly three times difference, for example, between the specific volume resistivity of 1.0x10⁻¹ [Ω•cm] and the specific volume resistivity of 3.0x10⁻¹ [Ω•cm], such a degree of exactness is not required in the measurement results of the specific volume resistivity as it is clearly known by those skilled in the art. Thus, since the specific volume resistivity of 1.0x10⁻¹ [Ω•cm] and the specific volume resistivity 3.0x10⁻¹ [Ω•cm] both are on the same order of "10⁻¹", please note that those can be evaluated as equivalent to each other.

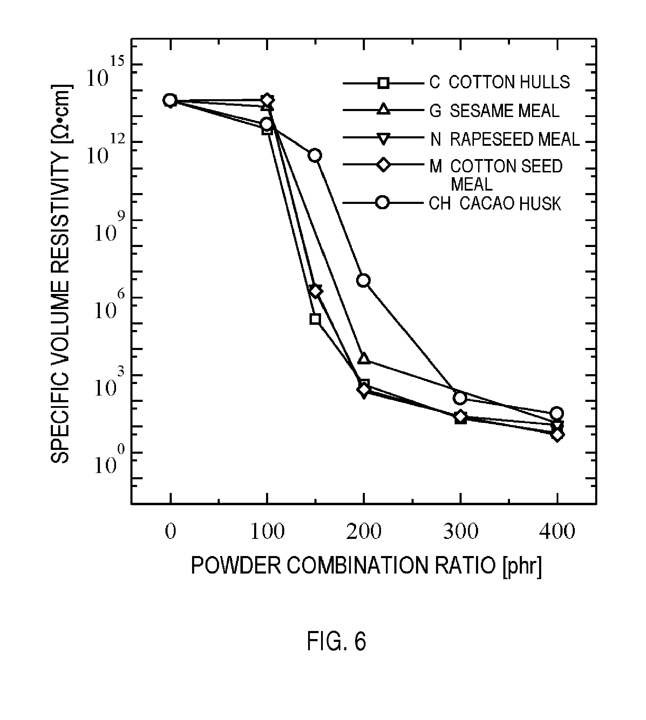

Fig. 6 shows a chart indicating the relationship between the content ratio of the burned material of cacao husk and the specific volume resistivity related to the electromagnetic shielding member explained referring to Fig.1. The lateral axis and vertical axis of Fig. 6 respectively represent the content ratio [phr] of the burned material of cacao husk and the specific volume resistivity [Ω•cm]. In addition, Fig. 6 also shows a chart indicating the relationship related to the electromagnetic shielding member using the respective burned materials of cotton hulls, sesame meal, rapeseed meal and cotton seed meals. The plotted numeric in Fig 6 is an average of measurements at 9 arbitrarily chosen points in the electromagnetic shielding member.

As shown in Fig. 6, each specific volume resistivity of cacao husk etc. had a measurement result similar to each other. Each specific volume resistivity of cacao husk etc. is also similar to the specific volume resistivity of soybean hulls.

Regarding only to the respective burned materials of soybean hulls, rapeseed meal, sesame meal, cotton seed meal and cotton hulls, when the content ratio of the burned plant material against rubber is set to 200 [phr] or above, it is found that the surface resistivity significantly decreases in all cases in contrast to the case that said content ratio is set to 150 [phr] or below. In contrast, regarding the burned materials of cacao husk, it is found that the surface resistivity significantly decreases linearly to the increase of the content ratio against the rubber.

Regarding the burned materials of cacao husk etc. according to this embodiment, the bulk specific gravity has been measured in conformity to JIS K-1474. The bulk specific gravity of rapeseed meal, sesame meal, cotton seed meal, cotton hulls and cacao husk were approx. 0.6 g/ml to 0.9 g/ ml, approx. 0.7 g/ml to 0.9 g/ ml, approx. 0.6 g/ml to 0.9 g/ ml, approx. 0.3 g/ml to 0.5 g/ ml, and approx. 0.3 g/ml to 0.5 g/ ml respectively. The kinds of hulls (cotton hulls and cacao husk) are a relatively bulky.

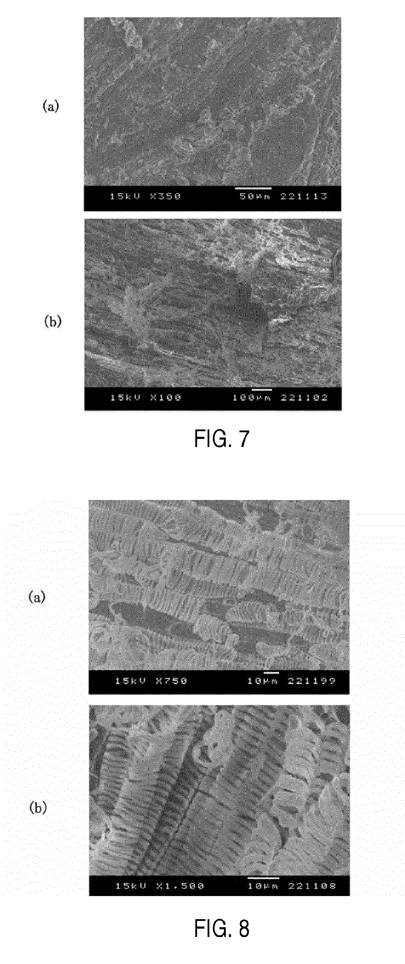

Fig. 7 and Fig. 8 show SEM pictures of cacao husk before burning. Fig. 7(a), Fig. 7(b), Fig. 8(a), and Fig. 8(b) respectively show a picture of the outer skin taken at 350-fold magnification, a picture of the inner skin taken at 100-fold magnification, a picture of the inner skin taken at 750-fold magnification, and a picture of the inner skin taken at 1500-fold magnification.

As shown in Fig. 7(a), the outer skin of cacao husk before burning is a form like the surface of a limestone. In contrast, as shown in Fig. 7(b), the inner skin of cacao husk before burning is a form like the fibrous.

Interestingly, as shown in Fig. 8(a) and Fig. 8(b), the inner skin of cacao husk before burning is a form like the spiral when the fibrous part is expanded. In addition, the diameter of spiral portion is visible to 10 µm - 20 µm in general.

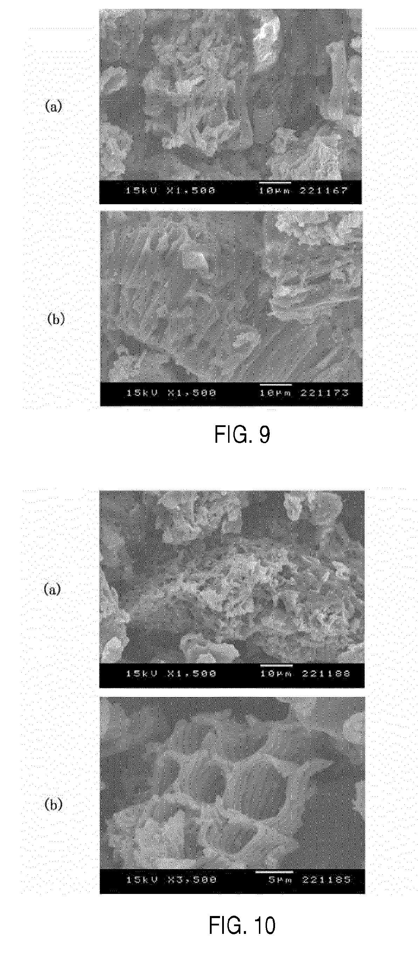

Fig. 9 and Fig. 10 show SEM pictures of cacao husk burned without distinguishing by the inner skin and the outer skin. Fig. 9(a), Fig. 9(b), and Fig. 10(a) respectively show a picture of the burned material taken at 1500-fold magnification, and Fig. 10(b) shows a picture of the burned material taken at 3500-fold magnification.

From Fig. 9(a) and Fig. 10(b), it is confirmed that a form like the fibrous looked at the inner skin of cacao husk before burning is remaining also in the burned material of cacao husk. In addition, as for the size of the burned material, the diameter of spiral portion seems to be shrunk to approximately 5 µm-10 µm. Moreover, from Fig. 9(b) and Fig. 10(a), it is confirmed that the burned material of cacao husk is a variegated porous structure.

A form like the spiral is not confirmed in soybean hulls, rapeseed meal, sesame meal, cotton seed meal, cotton hulls and soybean chaffs as stated above. Therefore, such a form has a high possibility of being peculiar to a cacao husk.

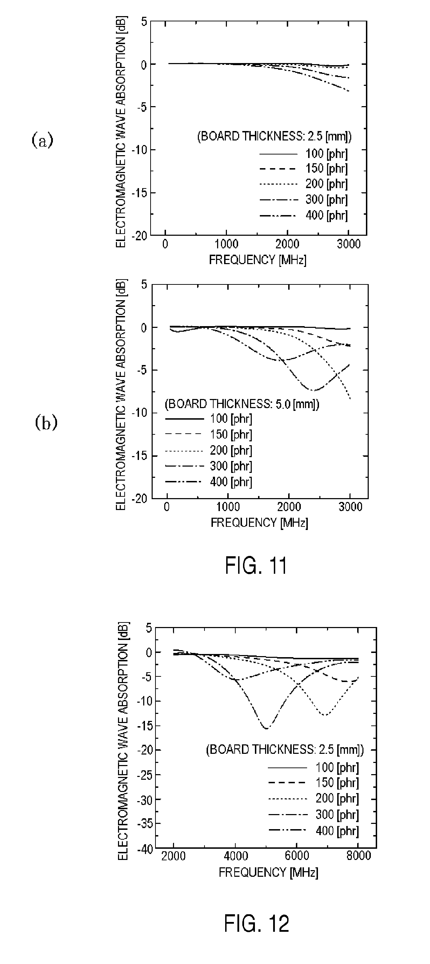

Fig. 11 shows a chart indicating the electromagnetic wave absorption characteristics of the electromagnetic shielding member formed from the burned material of cacao husk. Fig. 12 shows a chart indicating the electromagnetic wave absorption characteristics of the electromagnetic shielding member formed from the burned material of cacao husk. In Fig. 11(a), Fig. 11(b) and Fig. 12, the lateral axis and vertical axis indicate frequency [MHz] and electromagnetic wave absorption [dB] respectively.

For calculating the electromagnetic wave absorption characteristics shown in Fig. 10 etc., the electrically conductive composition with a size of 300 [mm] x 300 [mm] was mounted on a metallic plate with the same size, and the electrically conductive composition was irradiated with incident waves at frequencies plotted in Fig. 11and Fig. 12 etc. so as to measure the energy of the reflected waves from the electrically conductive composition, thus the energy difference between the incident wave and the reflected wave, that is, the electromagnetic wave absorption (energy loss) was calculated. Said measurement was carried out based on the arch test method by using an arch type electromagnetic wave absorption measuring apparatus.

Looking at Fig. 11(a) and Fig. 11(b), when the thickness of the heat conducting member is 2.5 [mm], the absorption characteristic of about maximum -3 [dB] has been obtained in the frequency band of 3000 [MHz] and below, and when 5.0 [mm], the absorption characteristic of about maximum -8 [dB] has been obtained.

Looking at Fig. 12, it is found that the maximum value of the electromagnetic wave absorption in the burned material of cacao husk is about -15 [dB] in the frequency band of 2000 [MHz] - 6000 [MHz]. Then, the result indicated that the frequency with the maximum electromagnetic wave absorption was around 4000 [MHz] - 6000 [MHz].

Next, the measurement result of thermal conductivity of the heat conducting member of this embodiment is explained. Thermal conductivity measurement was performed under the temperature of 25 °C to each sample mentioned later. The measuring method of thermal conductivity was made into the hot wire method, and was carried out in accordance with JIS standard R2616.

The measurement of thermal conductivity of a sample was carried out in the state where eight heat conducting members of size with 100mm (length) x 50mm (width) x 2.5mm (thickness) were made to laminate (2.0mm (thickness) x 10 laminations was adopted only for the measurement of sample A and for the measurement of 150phr regarding sample D). Moreover, the quick thermal conductivity meter QTM-500 (manufactured by Kyoto Electronics Manufacturing Co., Ltd.) was used as measuring device. And, the measurement of thermal conductivity was carried out on the accuracy conditions from which the numerical value of less than ±5% of the thermal conductivity standard value of standard sample mentioned later is acquired.

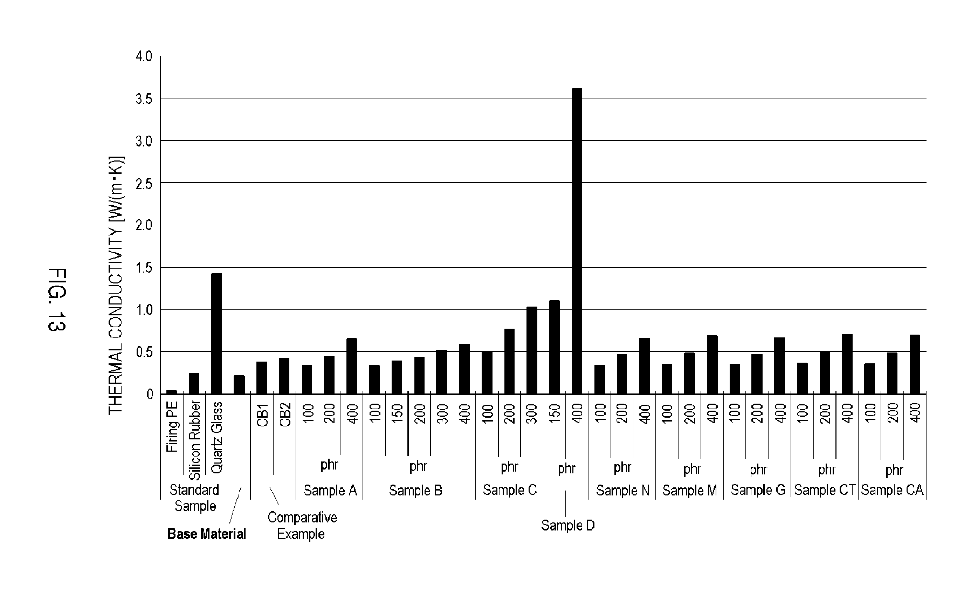

Fig. 13 shows a chart indicating the measurement result of thermal conductivity of the heat conducting member of this embodiment. Fig. 13 shows the thermal conductivities in the case that various samples described below and, as a comparative example, two kinds of arbitrary carbon black (CB1, 2) which is circulating in the market were contained a predetermined amount against the base material (ethylene propylene diene monomer rubber). In addition, Fig. 13, for reference, also shows the thermal conductivities of firing polyethylene (PE), silicon rubber, and quartz glass as a standard samples. 2.0mm (thickness) x 10 laminations was adopted for CB2.

First, the thermal conductivities of standard samples were the firing polyethylene (PE), silicon rubber, and quartz glass of respectively 0.036 [W/(m • K)], 0.238 [W/(m • K)], and 1.42 [W/(m • K)].

The thermal conductivities of carbon black (CB1, 2) were 0.377 [W/(m • K)] and 0.418 [W/(m • K)] respectively. The content ratios of the carbon black (CB1, 2) against the base material were 100 phr respectively. In addition, the thermal conductivity of base material was slightly 0.211 [W/(m • K)].

Sample A is a heat conducting member which burned the soybean hulls at the temperature of approx. 900 °C, and is not pulverized. The heat conducting member uses the heat conducting material which has approx. 30 µm median diameters. The thermal conductivities in the case that the content ratios of Sample A against the base material were 100 phr, 200 phr and 400 phr respectively were 0.342 [W/(m • K)], 0.446 [W/(m • K)] and 0.651 [W/(m • K)] respectively.

Sample B is a heat conducting member which burned the soybean hulls at the temperature of approx. 900 °C, and is pulverized. The heat conducting member uses the heat conducting material which has approx. 5 µm median diameters. The thermal conductivities in the case that the content ratios of Sample B against the base material were 100 phr, 150 phr, 200 phr, 300 phr and 400 phr respectively were 0.334 [W/(m • K)], 0.391 [W/(m • K)], 0.436 [W/(m • K)], 0.518 [W/(m • K)] and 0.587 [W/(m • K)] respectively.

Sample C is a heat conducting member which burned the soybean hulls at the temperature of approx. 1500 °C, and is not pulverized. The heat conducting member uses the heat conducting material which has approx. 30 µm median diameters. The thermal conductivities in the case that the content ratios of Sample C against the base material were 100 phr, 200 phr and 300 phr respectively were 0.498 [W/(m • K)], 0.769 [W/(m • K)] and 1.030 [W/(m • K)] respectively.

Sample D is a heat conducting member which burned the soybean hulls at the temperature of approx. 3000 °C, and is not pulverized. The heat conducting member uses the heat conducting material which has approx. 30 µm median diameters. The thermal conductivities in the case that the content ratios of Sample D against the base material were 150 phr and 400 phr respectively were 1.100 [W/(m • K)] and 3.610 [W/(m • K)] respectively.

Sample N is a heat conducting member which burned the rapeseed meal at the temperature of approx. 900 °C, and is not pulverized. The heat conducting member uses the heat conducting material which has approx. 48 µm median diameters. The thermal conductivities in the case that the content ratios of Sample N against the base material were 100 phr, 200 phr and 400 phr respectively were 0.344 [W/(m • K)], 0.460 [W/(m • K)] and 0.654 [W/(m • K)] respectively.

Sample M is a heat conducting member which burned the cotton seed meal at the temperature of approx. 900 °C, and is not pulverized. The heat conducting member uses the heat conducting material which has approx. 36 µm median diameters. The thermal conductivities in the case that the content ratios of Sample N against the base material were 100 phr, 200 phr and 400 phr respectively were 0.348 [W/(m • K)], 0.482 [W/(m • K)] and 0.683 [W/(m • K)] respectively.

Sample G is a heat conducting member which burned the sesame meal at the temperature of approx. 900 °C, and is not pulverized. The heat conducting member uses the heat conducting material which has approx. 61 µm median diameters. The thermal conductivities in the case that the content ratios of Sample N against the base material were 100 phr, 200 phr and 400 phr respectively were 0.345 [W/(m • K)], 0.471 [W/(m • K)] and 0.665 [W/(m • K)] respectively.

Sample CT is a heat conducting member which burned the cotton hulls at the temperature of approx. 900 °C, and is not pulverized. The heat conducting member uses the heat conducting material which has approx. 34 µm median diameters. The thermal conductivities in the case that the content ratios of Sample CT against the base material were 100 phr, 200 phr and 400 phr respectively were 0.361 [W/(m • K)], 0.495 [W/(m • K)] and 0.705 [W/(m • K)] respectively.

Sample CA is a heat conducting member which burned the cacao husk at the temperature of approx. 900 °C, and is not pulverized. The heat conducting member uses the heat conducting material which has approx. 39 µm median diameters. The thermal conductivities in the case that the content ratios of Sample CA against the base material were 100 phr, 200 phr and 400 phr respectively were 0.355 [W/(m • K)], 0.483 [W/(m • K)] and 0.692 [W/(m • K)] respectively.

First, when comparing the thermal conductivity of base material and the thermal conductivity of each sample, it can be found that the thermal conductivity of each sample is high. Therefore, it can be found that containing the heat conducting material of this embodiment against the base material is better in respect of thermal conductivity rather than using only base material as a heat conducting member.

The thermal conductivity in the case that the content ratio of Sample A against the base material is 100 phr has no great difference compared to each of comparative examples. It seems due to the fact that the carbon content against the base material is close. In addition, although the thermal conductivity in the case that the content ratio of Sample A against the base material is 200 phr can be evaluated as slightly better compared to each of comparative examples, the significant increase cannot be confirmed. On the other hand, the thermal conductivity in the case that the content ratio of Sample A against the base material is 400 phr increased to more than 1.5 times compared to each of comparative examples.

Next, when the thermal conductivity of Sample A and the thermal conductivity of Sample N, M, G, CT, and CA are contrasted, it can be found that the same tendency is seen generally. That is, in the case that the content ratio of heat conducting material regarding each of these samples against the base material is same, it can be found that the thermal conductivity shows the same value. And, in the case that the content ratio of heat conducting material regarding each of these samples against the base material is increased, it can be found that the thermal conductivity also increases.

Next, when Sample A and Sample B are contrasted, Sample B using small median diameter has become loose slightly of the increasing trend in thermal conductivity. Therefore, it is considered that the step of "pulverizing" is better to delete to increase the thermal conductivity.

Next, when Sample A and Sample C are contrasted, it can be found that the thermal conductivity increases with the increasing the burning temperature at the time of producing heat conducting material. For Sample C, when the content ratio of heat conducting material against the base material is only 100 phr, the thermal conductivity of approx. 0.5 [W/(m • K)] can be confirmed.

Similarly, when Sample A and Sample D are contrasted, it can be found that the thermal conductivity increases with the increasing the burning temperature at the time of producing heat conducting material. For Sample D, when the content ratio of heat conducting material against the base material is only 150 phr, the thermal conductivity of approx. 1.1 [W/(m • K)] can be confirmed. In addition, surprisingly, for Sample D, in the case that the content ratio of heat conducting material against the base material is 400 phr, the thermal conductivity of approx. 17 times to the thermal conductivity of the base material can be obtained.

Here, why such measurement result was obtained is considered. First, carbon itself has a heat transfer property. When substances having heat transfer property are in close to each other, a heat bridge is formed. The carbon content of the heat conducting material of this embodiment is high, so a heat bridge is easy to be formed. It is consider that the heat conducting material of this embodiment is excellent in thermal conductivity, so as to contain the heat conducting member.

### INDUSTRIAL APPLICABILITY

The present invention is related to a heat conducting material, an electromagnetic shielding member and an electrically conductive composition. It has applicability in the field of heat conducting sheet, etc.

### BRIEF DESCRIPTION OF THE DRAWINGS

Fig. 1 shows a schematic production process diagram of the electromagnetic shielding member using the burned material of cacao husk.
Fig. 2 shows a chart indicating the measurement results of the electromagnetic shielding characteristics of the burned materials of cacao husk.
Fig. 3 shows charts indicating the results of component analysis based on the ZAF quantitative analysis method for cacao husk before and after burning.
Fig. 4 shows charts indicating the result of the component analysis based on the organic micro-elemental analysis method corresponding to Fig. 3.
Fig. 5 shows a chart indicating the test results of the conductivity test regarding the burned materials of cotton hulls, sesame meal, rapeseed meal, cotton seed meal and cacao husk.
Fig. 6 shows a chart indicating the relationship between the content ratio of the burned material of cotton hulls, sesame meal, rapeseed meal or cotton seed meal, and the specific volume resistivity.
Fig. 7 shows a SEM picture of raw cacao husk.
Fig. 8 shows a SEM picture of raw cacao husk.
Fig. 9 shows a SEM picture of cacao husk burned without distinguishing by the inner skin and the outer skin.
Fig. 10 shows a SEM picture of cacao husk burned without distinguishing by the inner skin and the outer skin.
Fig. 11 shows a chart indicating the electromagnetic wave absorption characteristics of the electromagnetic shielding members formed from the burned material of cacao husk.
Fig. 12 shows a chart indicating the electromagnetic wave absorption characteristics of the electromagnetic shielding members formed from the burned material of cacao husk.
Fig. 13 shows a chart indicating the measurement result of thermal conductivity of the heat conducting member of this embodiment.

## Claims

1. A member comprising a burned material of cacao husk and a base material, wherein the burned material of cacao husk is sieved so that the median diameter of the burned material of cacao husk becomes approx. 85 µm or below.

2. The member as claimed in Claim 1, wherein a content ratio of burned material of cacao husk against the base material can be determined according to the frequency band of the electromagnetic waves to be shielded.

3. The member as claimed in Claim 1, wherein the base material is one of rubber, paint and cement.

4. A burned material of cacao husk included in the member as claimed in Claim 1.
